# EUROPÄISCHE PATENTSCHRIFT

(11) **EP 1 391 369 B1**
(45) Veröffentlichungstag und Bekanntmachung des Hinweises auf die Patenterteilung: **07.06.2006**
(21) Anmeldenummer: 03017463.5
(22) Anmeldetag: 01.08.2003
(51) Int. Cl.: B62D 29/00

(54) **Dreidimensional geformtes Bauteil, insbesondere Kraftfahrzeug-Karosseriebauteil**
Three dimensional formed component, especially motor vehicle body component
Composant tridimensionnel, notamment composant de véhicule automobile

(30) Priorität: 23.08.2002 DE 10238669
(43) Veröffentlichungstag der Anmeldung: 25.02.2004
(73) Patentinhaber: AUDI AG, 85045 Ingolstadt (DE)
(72) Erfinder: Haldenwanger, Hans-Günther, Prof.Dr., 85055 Ingolstadt (DE)
(74) Vertreter: Geissler, Manfred

(56) Entgegenhaltungen:
- WO-A-01/58740

## Beschreibung

Die Erfindung bezieht sich auf ein dreidimensional geformtes Bauteil, insbesondere Kraftfahrzeug-Karosseriebauteil, gemäß Oberbegriff des Patentanspruches 1.

Ein solches dreidimensional geformtes Bauteil ist beispielsweise durch die DE 30 00 666 A1 bekannt geworden. Diese Offenlegungsschrift beschreibt ein Verfahren zum Herstellen einer Fahrzeugkarosserie mit einem Kofferraum, dessen Boden als separates Bauteil ausgebildet ist und welcher im Wesentlichen von Aufbauteilen der Karosserie umschlossen ist. Der Boden ist als Kunststoffformteil hergestellt, in die Aufbauteile eingesetzt und mit diesen verbunden. Die Verbindung erfolgt zumindest teilweise durch Klebung. Für eine randseitige Verbindung ist der Boden zur flächigen Anlage an den umgebenden Aufbauteilen mit Randflanschen versehen.

Einen in soweit vergleichbaren Aufbau einer Fahrzeugkarosserie zeigt des weiteren die gattungsgemäβe DE 29 23 874 C2. Ein vollständig aus Kunststoff bestehender Boden, der darüber hinaus mit Einbauten der Innenausstattung, insbesondere mit einem Bodenbelag, versehen ist, wird als so gebildete vormontierte Baugruppe nach Lackierung mit den metallischen Rahmenteilen der Fahrzeugkarosserie verbunden. Die Verbindung erfolgt vorzugsweise durch Klebung.

In enger Beziehung zu den beiden vorstehend erwähnten Patentdokumenten steht der Aufsatz "Das Audi-Konzept für die Entwicklung eines zukünftigen Personenwagens mit erhöhtem Nutzwert" in ATZ, Automobiltechnische Zeitschrift 82 (1980), Seiten 187 - 197, wo als Entwicklungsziele die Energie- und Ressourcenschonung, Umweltverträglichkeit, Sicherheit, Wirtschaftlichkeit und Nutzwert usw. erwähnt sind. Bezüglich des zweiten Elementes eines dreidimensional geformten Bauteiles aus einem nichtmetallischen Werkstoff ist in dieser Literaturstelle auch von Faserverbund- / Sandwichkonstruktionen die Rede.

Konstruktive und herstellungstechnische Fortbildungen solcher dreidimensional geformter Faserverbundbauteile finden sich beispielsweise in der DE 196 08 127 C2, die ein Verfahren zur Herstellung eines Kraftfahrzeugbodens aus einen solchen Faserverbundbauteil beschreibt.

Mit Karosserieaußenhautteilen aus Faserverbundwerkstoff für Kraftfahrzeuge befasst sich auch die DE 30 11 336 A1. Zwecks Optimierung der Oberflächenqualität wird dabei vorgeschlagen, die zur sichtbaren Seite hin zeigenden Flächen mit einem dünnen Metallblech zu überziehen. Bezüglich der Fasern für die Faserverbundmasse wird angesprochen, dass die Faserorientierung auf die Belastung abgestimmt sein kann. Durch geeignete Wahl der Faserorientierung lässt sich auch die Wärmedehnung des Faserverbundstoffteils auf die Wärmedehnung des Blechs abstimmen.

Die Problematik bezüglich unterschiedlicher Wärmeausdehnungskoeffizienten bei der Verbindung von Faserverbundwerkstoffen mit metallischen Bauteilen ist des Weiteren auch in der DE 100 02 642 A1 und in der DE 38 18 478 C2 angesprochen. Die unterschiedlichen thermischen Ausdehnungskoeffizienten verursachen bei der Bearbeitung und bei Verwendung in Metall-Kunststoffverbunden, die in einem großen Temperaturbereich eingesetzt werden, innere Spannungen und Verzug, die eine niedrigere mechanische Belastbarkeit und eine raschere Materialermüdung bewirken.

Die erstgenannte Offenlegungsschrift behandelt Metall-Kunststoff-Verbunde, in denen die verwendeten Kunststoffstrukturen ähnliche thermische Ausdehnungskoeffizienten wie die verwendeten Metalle besitzen und deren Festigkeiten und Steifigkeiten über denjenigen reiner Metallstrukturen liegen. Die zweitgenannte Patentschrift betrifft die Verwendung eines Verbundwerkstoffes, enthaltend eine Metallschicht und eine faserverstärkte Polypropylenschicht, wobei gefunden wurde, dass durch einen unterschiedlich erzielbaren Vernetzungsgrad des Polyolefins und durch Abstimmung des Glasgehaltes der lineare Temperaturausdehnungskoeffizient der verstärkten Polypropylenschicht veränderbar ist und dem linearen Ausdehnungskoeffizienten z. B. von Stahl (13 x 10⁻⁶ / K) und von Aluminium (23 x 10⁻⁶/ K) oder Magnesium (26 x 10⁻⁶/ K) angepasst werden kann.

Ein Zielkonflikt entsteht allerdings immer dann, wenn nicht eine Angleichung von linearen Wärmeausdehnungskoeffizienten, sondern Festigkeitskriterien der einzelnen Elemente eines dreidimensional geformten Bauteiles der gattungsgemäßen Art im Vordergrund stehen. Dies führt dazu, dass bei solchen dreidimensional geformten Bauteilen an der Verbindungsstelle, selbst wenn diese als Klebeverbindung ausgeführt ist, das Vorliegen unterschiedlicher Wärmeausdehnungskoeffizienten kaum vermieden werden kann und die daraus resultierenden unterschiedlichen Dehnungen der miteinander verbundenen Elemente nur unzureichend ausgeglichen werden.

Von daher liegt der Erfindung die Aufgabe zugrunde, ein gattungsgemäßes dreidimensional geformtes Bauteil so zu gestalten, dass das Auftreten unterschiedlicher thermischer Ausdehnungskoeffizienten verhindert oder doch zumindest weitgehend vermieden wird.

Dieses Ziel wird erfindungsgemäß mit dem Gegenstand des Patentanspruches 1 erreicht. Damit ist ein dreidimensional geformtes Bauteil geschaffen, bei dem einerseits Probleme hinsichtlich unterschiedlicher Wärmeausdehnungskoeffizienten nicht mehr auftreten und bei dem darüber hinaus insbesondere bezüglich des zweiten Elementes eine einfache Anpassung an festigkeitsmäßige Anforderungen auf einfache Weise realisierbar ist.

Vorteilhafte Ausgestaltungen und Weiterbildungen der Erfindung sind Gegenstand der Unteransprüche.

Im Folgenden wird die Erfindung anhand von Ausführungsbeispielen in Verbindung mit der Zeichnung näher beschrieben. Dabei zeigen
- Fig. 1: einen Ausschnitt aus einem dreidimensional geformten Bauteil im Verbindungsbereich von erstem und zweitem Element,
- Fig. 2: eine entsprechende Darstellung eines weiteren Ausführungsbeispieles eines dreidimensional geformten Bauteiles mit einem zweigeteilten Element aus einem nichtmetallischem Werkstoff und
- Fig. 3: ein weiteres Ausführungsbeispiel für das Element aus einem nichtmetallischen Werkstoff.

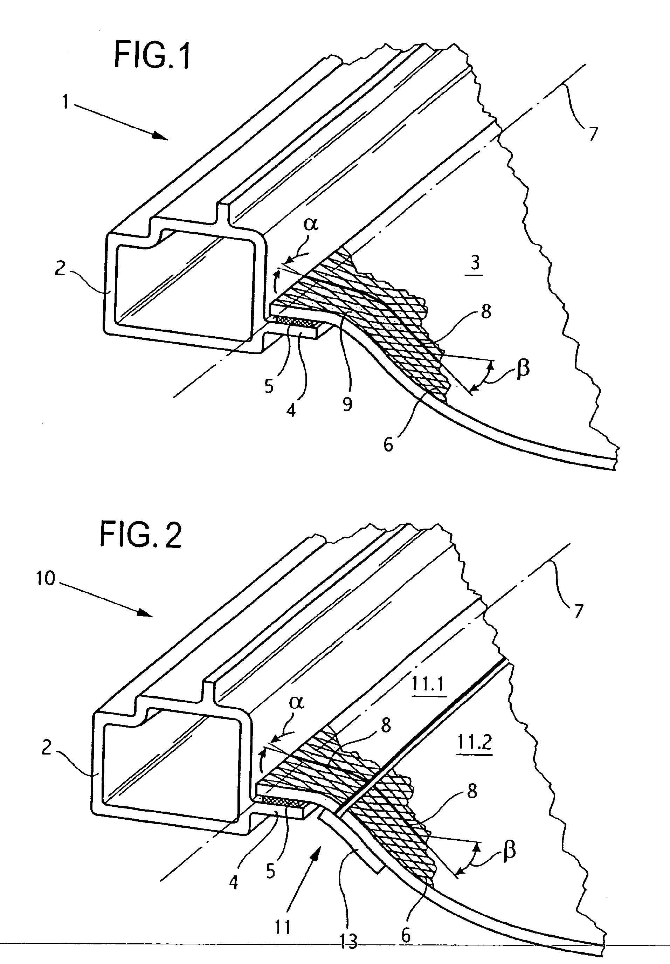

Gemäß Fig. 1 besteht ein dreidimensional geformtes Bauteil 1 welches beispielweise ein Kraftfahrzeug-Karosseriebauteil sein kann, aus einem aus einem Aluminiumwerkstoff gefertigten Hohlprofil 2 als erstes Element und einem damit verbundenen großflächigen Faserverbundteil 3 als zweites Element. Die Verbindung erfolgt entlang eines an das Hohlprofil 2 angeformten Flansches 4, auf dem ein Randbereich des Faserverbundteiles 3 aufliegt, über einen geeigneten Kleber 5.

Das Faserverbundteil 3 kann aus einer Anzahl übereinander liegender, textiler Gewebezuschnitte mit enthaltenen Fasern 6 aufgebaut sein. Auf die erfindungsgemäße Faserorientierung wird später noch eingegangen werden.

Aus Festigkeits- und Gewichtsgründen können die Gewebelagen z. B. aus Carbonfasern hergestellt sein, denen in bestimmten Bereichen, wo ein örtlich erhöhtes Elastizitäts- oder Stoßadsorptionsverhalten gefordert wird, Glas- bzw. Aramidfaseranteile zugemischt werden. Bei Verwendung eines thermoplastischen Matrixsystems enthalten die Gewebe ferner thermoplastische Faseranteile in gleichförmiger Verteilung. Gelangt ein duromeres Matrixsystem zur Anwendung, so wird das Faserverbundteil 3 z. B. aus trockenen Gewebelagen aufgebaut. Statt dessen können aber auch vorimprägnierte Gewebezuschnitte, sogenannte Prepregs, verwendet werden. Bei einem duromeren Matrixsystem wird dem Faserhalbzeug entweder im Wege der Harzinjektion innerhalb eines Pressformwerkzeuges oder aber an einer diesem vorgeschalteten Imprägnierstation das Matrixsystem zugegeben, wobei das Faserhalbzeug beidseitig mit einer über Presswalzen angedrückten Harzfolie belegt und/oder mittels einer Sprühvorrichtung mit Flüssigharz imprägniert wird, bevor es als Ganzes in das Pressformwerkzeug eingelegt und beim Schließen desselben in eine räumliche Bauteilgeometrie umgeformt und dann unter Druck- und Wärmeeinwirkung konsolidiert wird.

Für das Matrixsystem eigenen sich Kunstharze, insbesondere die für solche Zwecke bekannten polymerisierbaren Kunstharze, z. B. Epoxidharze. Gleichfalls geeignet sind auch thermoplastische Kunststoffe, wie Polyamide, Polykarbonate, ABS, usw. Die Anteile von Harz- und Fasermaterial können in gewissen Grenzen variieren. Im Allgemeinen beträgt der Faseranteil 20 bis 70 %. Zur Herstellung besonders leichter Faserverbundteile 3 sollte ein möglichst hoher Faseranteil gewählt werden.

Ein nach bisherigem bekannten Stand der Technik aufgebautes dreidimensional geformtes Bauteil 1 war mit dem Problem behaftet, dass sich bei Temperaturschwankungen aufgrund eines gegenüber dem Faserverbundwerkstoff wesentlich höheren Dehnungsverhaltens des Aluminiumwerkstoffes an der Verbindungsstelle (Klebernaht 7) hohe Schubkräfte und somit hohe Schubspannungen entwickelten, die z. B. über die Kleberelastizität und Klebernahtdicke aufzunehmen sind. Um dies, z. B. bei einer sog. steifen Strukturklebung, zu vermeiden, wird erfindungsgemäß im Bereich der Klebernaht 7 eine solche Faserorientierung gewählt, dass das Faserverbundteil 3 in diesem Bereich einen Wärmeausdehnungskoeffizienten besitzt, der zumindest in etwa dem des Aluminiumwerkstoffes des Hohlprofiles 2 entspricht. Dabei ergibt sich z. B. eine Faserorientierung mit einem Faserverlaufwinkel α in der Größenordnung von α = ± 10 bis 30 ° gegenüber einer Orthogonalen 8 zur Klebernaht 7. Damit ergibt sich im weitesten Sinne eine anisotrope Faserorientierung. Diese Faserorientierung geht in einer Übergangszone 9, die auch eine Dehnungsübergangszone darstellt und im Wesentlichen durch eine quasi-isotrope Faserorientierung gekennzeichnet ist, in einen Bereich über, bei dem der Faserverlaufwinkel β gegenüber der Orthogonalen 8 beispielsweise bei β = ± 45 ° liegen und damit durch eine isotrope Faserorientierung gekennzeichnet sein kann.

Die Erfindung macht sich also die Erkenntnis zu nutze, dass das Dehnungsverhalten eines Faserverbundwerkstoffes und damit der Wärmeausdehnungskoeffizient unter anderem abhängig ist von der Ausrichtung der enthaltenen Fasern. Daher kann an einer Verbindungsstelle mit einem anderen Werkstoff durch entsprechende Faserausrichtung eine dahingehende Anpassung vorgenommen werden, während im übrigen Flächenbereich durch eine anderweitige Faserorientierung andere Prioritäten, wie beispielsweise optimierte Festigkeitseigenschaften, im Vordergrund stehen können.

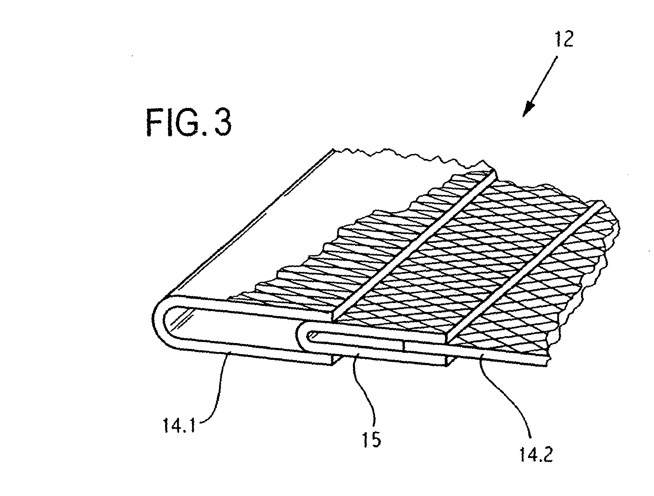

Das Ausführungsbeispiel gemäß Fig. 2 unterscheidet sich von dem zuvor beschriebenen dadurch, dass bei diesem dreidimensional geformten Bauteil 10 das großflächige Faserverbundteil 11 zweigeteilt ist. Es besteht aus einem unmittelbar mit dem Hohlprofil 2 verbundenen (Klebernaht 7), streifenförmigen Randbereich 11.1 und einem sich daran anschließenden, beispielsweise mittels eines Einlegeteiles 13 verbundenen Flächenabschnitt 11.2. Die Verbindung zwischen Randbereich 11.1 und Flächenabschnitt 11.2 über das Einlegeteil 13 kann z. B. im Zuge des bekannten Heißpressverfahrens geschehen. Bezüglich der Faserorientierungswinkel α und β und dem damit zusammenhängenden Wärmeausdehnungsverhalten (Ausdehnungskoeffizienten) wird in soweit eine Optimierung zu finden sein, als das Wärmeausdehnungsverhalten des Randbereiches 11.1 zwischen dem Wärmeausdehnungsverhalten von Hohlprofil 2 und Flächenabschnitt 11.2 liegt.

Der Flansch- und Übergangsbereich kann auch dadurch gestaltet werden, dass Randbereich 14.1 und Einlegeteil 15 durch aufschneiden von Wickelkörpern hergestellt und anschließend diese miteinander und mit dem Flächenabschnitt 14.2 der Faserverbundteiles 12 im Press- oder Autoklawerfahren verbunden werden (Fig. 3).

Es können dabei im Gewebe/Gestricke integrierte Thermoplastgarne, sog. Cumminglinggarne, verwendet werden.

## Patentansprüche

1. Dreidimensional geformtes Bauteil, insbesondere Kraftfahrzeug-Karosseriebauteil, bestehend aus einem ersten Element aus einem metallischen Werkstoff und einem randseitig daran befestigten zweiten Element aus einem nichtmetallischen Werkstoff, **dadurch gekennzeichnet, dass** das zweite Element (3,11,12) entlang der randseitigen Verbindung (7) mit dem ersten Element (2) einen an den Wärmeausdehnungskoeffizienten des ersten Elementes (2) angepassten Wärmeausdehnungskoeffizienten aufweist und im Übrigen einen davon abweichenden Wärmeausdehnungskoeffizienten besitzt..

2. Dreidimensional geformtes Bauteil nach Patentanspruch 1, **gekennzeichnet durch** ein Hohlprofil (2) aus einem Aluminiumwerkstoff und ein randseitig daran befestigtes großflächiges Faserverbundteil (3,11,12), wobei dessen unterschiedliche Wärmeausdehnungskoeffizienten **durch** unterschiedliche Faserverlaufwinkel (α,β) erreicht werden.

3. Dreidimensional geformtes Bauteil nach Patentanspruch 2, **dadurch gekennzeichnet, dass** das Faserverbundteil (3,11,12) entlang der randseitigen Verbindung (7) und gegenüber einer Orthogonalen (8) dazu eine Faserorientierung mit einem Faserverlaufwinkel α = ± 10 - 30 ° aufweist, während der übrige Flächenbereich des Faserverbundteiles (3,11,12) einen davon abweichenden Faserverlaufwinkel β aufweist.

4. Dreidimensional geformtes Bauteil nach Patentanspruch 3, **dadurch gekennzeichnet, dass** die unterschiedlichen Faserorientierungen in einer Übergangszone (9), die auch eine Dehnungsübergangszone darstellt, ineinander übergehen.

5. Dreidimensional geformtes Bauteil nach Patentanspruch 3, **dadurch gekennzeichnet, dass** das großflächige Faserverbundteil (11,12) zweigeteilt ist, bestehend aus einem mit dem Hohlprofil (2) verbundenen, streifenförmigen Randbereich (11.1) und einem sich daran anschließenden, mittels eines Einlegeteiles (13) verbundenen Flächenabschnitt (11.2), wobei Randbereich (11.1) und Flächenabschnitt (11.2) unterschiedliche Faserorientierungswinkel (α,β) aufweisen.

6. Dreidimensional geformtes Bauteil nach Patentanspruch 5, **dadurch gekennzeichnet, dass** Randbereich (14.1) und Einlegeteil (15) im Wickelverfahren durch aufschneiden von Wickelkörpern hergestellt und im Press- oder Autoklawerfahren miteinander und mit dem Flächenabschnitt 14.2 verbunden werden.

## Claims

1. Three-dimensionally formed component, in particular motor vehicle body component, consisting of a first element of a metallic material and a second element of a non-metallic material fastened to the edge thereof, **characterised in that** the second element (3, 11, 12) has a coefficient of thermal expansion adapted to the coefficient of thermal expansion of the first element (2) along the edge joint (7) with the first element (2) and otherwise has a coefficient of thermal expansion differing therefrom.

2. Three-dimensionally formed component according to claim 1, **characterised by** a hollow section (2) of an aluminium material and a large-area fibre composite part (3, 11, 12) fastened to the edge thereof, their different coefficients of thermal expansion being achieved by different fibre angles (α, β).

3. Three-dimensionally formed component according to claim 2, **characterised in that** the fibre composite part (3, 11, 12) has a fibre orientation with a fibre angle α = ± 10 - 30° along the edge joint (7) and with respect to a perpendicular (8) thereto, while the remaining surface region of the fibre composite part (3, 11,12) has a fibre angle β differing therefrom.

4. Three-dimensionally formed component according to claim 3, **characterised in that** the different fibre orientations merge into one another in a transition zone (9) also representing an expansion transition zone.

5. Three-dimensionally formed component according to claim 3, **characterised in that** the large-area fibre composite part (11, 12) is divided into two parts, consisting of a strip-shaped edge region (11.1) joined to the hollow section (2) and an adjacent surface portion (11.2) joined by means of an insert part (13), the edge region (11.1) and the surface portion (11.2) having different fibre angles (α, β).

6. Three-dimensionally formed component according to claim 5, **characterised in that** the edge region (14.1) and the insert part (15) are produced during the winding process by cutting open wound packages and are joined to one another and to the surface portion (14.2) during the pressing or autoclaving process.

## Revendications

1. Composant de forme tridimensionnelle, notamment composant de carrosserie de véhicule automobile, constitué d'un premier élément en matériau métallique et d'un deuxième élément en un non matériau métallique fixé du côté du bord sur celui-ci, **caractérisé en ce que** le deuxième élément (3, 11, 12) présente, le long de la liaison du côté du bord (7) avec le premier élément (2), un coefficient de dilatation thermique adapté au coefficient de dilatation thermique du premier élément (2) et présente pour le reste un coefficient de dilatation thermique différent.

2. Composant de forme tridimensionnelle selon la revendication 1, **caractérisé par** un profilé creux (2) constitué d'un matériau à base d'aluminium et d'un élément composite à base de fibres (3, 11, 12) de grande surface fixé du côté du bord sur celui-ci, dont les coefficients de dilatation thermique différents sont obtenus à l'aide de différents angles d'orientation des fibres (α, β).

3. Composant de forme tridimensionnelle selon la revendication 2, **caractérisé en ce que** l'élément composite à base de fibres (3, 11, 12) présente, le long de la liaison du côté du bord (7) et par rapport à la direction orthogonale (8) une orientation de fibres avec un angle d'orientation de fibres α = ± 10 -30°, tandis que le reste de la surface de l'élément composite à base de fibres (3, 11, 12) présente un angle d'orientation des fibres β qui est différent.

4. Composant de forme tridimensionnelle selon la revendication 3, **caractérisé en ce que** les différentes orientations des fibres passent de l'une à l'autre dans une zone de transition (9) qui constitue également une zone de transition de dilatation.

5. Composant de forme tridimensionnelle selon la revendication 3, **caractérisé en ce que** l'élément composite à base de fibres (11, 12) de grande surface, est en deux parties, constitué d'une zone de bord (11.1), reliée au profilé creux (2) sous forme de bande et d'une partie de surface (11.2) raccordée dessus, reliée à l'aide d'un élément d'insertion (13), moyennant quoi la zone de bord (11.1) et la partie de surface (11.2) présentent différents angles d'orientation des fibres (α, β).

6. Composant de forme tridimensionnelle selon la revendication 5, **caractérisé en ce que** la zone de bord (14.1) et l'élément d'insertion (15) sont réalisés à l'aide d'un procédé par enroulement à l'aide d'une découpe des bobines et sont reliées entre elles et avec la partie de surface (14.2) à l'aide d'un procédé de pressage ou par autoclave.
